# EUROPEAN PATENT APPLICATION

(11) **EP 2 418 362 A1**
(43) Date of publication of application: **15.02.2012**
(21) Application number: 11151108.5
(22) Date of filing: 17.01.2011
(51) Int. Cl.: F01N 3/04, F01N 3/08, B01D 53/46, B01D 53/78, B01D 47/02, B01D 53/92

(54) **Exhaust gas purification apparatus and method**

(30) Priority: 09.08.2010 CN 201010249953
(71) Applicant: Lum, Ying Leung, Kwun Tong Hong Kong (CN)
(72) Inventor: Lum, Ying Leung, Kwun Tong Hong Kong (CN); Tung, Cheung Wai, Kwun Tong Hong Kong (CN)
(74) Representative: Cabinet Plasseraud

(57) **Abstract**

The present invention provides a vehicular exhaust gas purification apparatus and vehicular exhaust gas purification method, using a disperser (7) for dispersing the exhaust gas from a vehicle into small bubbles and channelling the bubbles into a reaction chamber (8) containing alkaline, so that a chemical reaction can take place between the acidic gases in the exhaust gas and the alkaline solution, and simultaneously enable the suspended particles in the exhaust gas to be dissolved in the solution, thereby providing purification by substantially lessening the amount of harmful substances in the exhaust gas.

## Description

### FIELD

The present invention relates to an apparatus and method for purifying motor vehicle exhaust gas. In particular, the present invention relates to an apparatus and method for purifying motor vehicle exhaust gas by means of fluid filtration.

### BACKGROUND

In modem society, motor vehicles have become an essential transportation tool. A motor vehicle adds considerable convenience to our daily work and normal lives. However, with the rapid development of the automotive industry and increasing use of motor vehicles, motor vehicle exhaust pollution is fast becoming a growing global problem. Motor vehicle exhaust gas is a key factor of air pollution, which can bring about serious consequences, such as causing harm to the urban environment, giving rise to respiratory diseases, releasing excessive levels of exhaust gas into the earth's atmosphere, as well as aggravation of the urban heat island effect.

In an attempt to improve urban air quality and reduce exhaust gas pollution, the European Union has introduced a series of stricter European Emission Standards (i.e., the EU I to EU V standards, as well as the EU VI standard that is about to be released). Many countries and motor vehicle companies have objected to the standards due to (i) the standards being set too high making it technically difficult to achieve, and (ii) the likely effect of significantly increasing production costs which manufacturers and consumers will find difficult to bear. In 2007, China's State Environmental Protection Administration released a series of Chinese Motor Vehicle Emission Limits Standards, which are equivalent to the EU III and EU IV standards. With the rapid economic development in China, and increasing social needs, China's motor vehicle population will substantially increase, and motor vehicle exhaust gas will become a largest source of air pollution in large and medium-sized cities. Thus, there is an urgent need to reduce motor vehicle exhaust gas emissions.

There are three main ways to control motor vehicle exhaust gas emissions: (1) by changing the power source for vehicles, e.g. developing electric vehicles and alternative fuel vehicles; (2) by improving current vehicle power devices and fuel quality; and (3) using advanced off-engine purification technologies, which are widely used at present in used and new cars for purifying the exhaust gas from motor vehicles so as to reduce pollution.

CN252909Y discloses a dust-elimination device for use in silencers (e.g. mufflers) and the exhaust systems (or chimneys) in various kinds of vehicles, the device having an intake pipe with holes along its sidewalls. CN2499584Y discloses a vehicle exhaust gas purifier, wherein a rear portion of the exhaust pipe includes exhaust holes orderly arranged in rows. CN2426525Y discloses a water-filtering-type exhaust gas purifier for internal combustion engines that is mounted at the exhaust of the internal combustion engine. A washing chamber, a recovering chamber and a depositing chamber are provided inside the purifier. The exhaust gas is introduced into the washing chamber by a pipe, which flows through a gap between a net plate (having a shower head shape) and steel balls placed in holes formed on the net plate. The exhaust gas reacts with chemicals in a solution inside the washing chamber, and is released after passing through the recovering chamber. CN2211316Y discloses a smoke eliminator having an accelerator for delivering a jet of smoke through a funnel-shaped nozzle into a purifying solution inside the filtering tank.

However, the above and known exhaust gas purification devices are merely able to introduce exhaust gas into a purifying solution, and are unable to disperse the exhaust gas into small bubbles to achieve better purification. Also, the above and known exhaust gas purification devices are unable to re-circulate fluid filtering materials used by the device. Consequently, there is a need for improved purification methods and devices, and in particular, purification methods and devices that can achieve more effective purification and help prolong the service life of fluid filtering materials used by the device.

### SUMMARY

The present invention relates to an apparatus and method for purifying exhaust gas. The exhaust gas (e.g. from a motor vehicle) passes through an inlet channel to enter an exhaust gas reaction chamber. The exhaust gas may first flow through a wire filter (e.g. made of steel wires) to minimise blockage in the small openings of a disperser by relatively large particles suspended in the exhaust gas. The exhaust gas passes through a stainless steel pipe before entering a disperser, which then passes through the openings of the disperser to form small bubbles entering the reaction chamber. The carbon dioxide (CO₂), sulphur dioxide (S0₂), nitrogen oxides etc., contained in the small bubbles engage in an acid-base neutralization reaction with alkaline solution such as a sodium hydroxide (NaOH) solution in the reaction chamber to form different kinds of salts, such as sodium carbonate (NaC0₃), while suspended particles in the exhaust gas are dissolved or captured in the solution (or other solvent). After filtration and reaction in the reaction chamber, the exhaust gas is discharged from an exhaust port of the reaction chamber, at which stage the harmful substances in the exhaust gas have been substantially reduced. A ventilator (e.g. a ventilation fan) may be provided at the exhaust port of the reaction chamber to help substantially maintain a balance between a flow of exhaust gas into and out of the reaction chamber.

Current exhaust gas purification devices for motor vehicles generally use a solid catalyst filtering material. In comparison with the fluid-based filtration technique utilised in the present invention, the acting surface area provided by a solid filter material is far less than that provided by a fluid filtering material, and thus, the present invention can provide better purification.

Also, the present invention can be used to provide a better solution to technical problems relating to the use of fluid filtration systems for purifying exhaust gas, such as vehicle exhaust gas blockage issues. For example, representative embodiments of the present invention may utilise improved dispersers having long dispersal passageways arranged in a spherical radiating configuration for effectively reducing resistance to the flow of exhaust gas, and for substantially dispersing the exhaust gas in the fluid filtering materials as small bubbles so that better purification can be achieved. In addition, the present invention may include a ventilator at the exhaust port of the reaction chamber for maintaining a balance between a flow of the exhaust gas into and out of the reaction chamber, to help minimise hindrance to the discharge of vehicle exhaust gas by the filtration system of the present invention.

Due to the unique characteristics of fluid filtration, the present invention may include a re-circulating filtration system for filtering the filtering material (or NaOH solution) periodically, to help prolong the service life of the filtering material and minimise the inconvenience of having to frequently replace the filtering material. This is an advantage of the present invention over conventional solid form filter materials.

According to one aspect of the present invention, there is provided an apparatus for purifying exhaust gas from a motor vehicle, the apparatus including: an reaction chamber, an inlet channel, and an exhaust port, characterized in that the reaction chamber contains fluid filtering material; the inlet channel is connected to one or more dispersers each having a long and narrow passageway, which are adapted for substantially dispersing the exhaust gas into the fluid filtering material as small bubbles; and the exhaust port has a ventilator for maintaining a balance between a flow of the exhaust gas into the reaction chamber and a flow of the exhaust gas out of the reaction chamber.

Preferably, the disperser includes: a tubular conduit, consisting of a passageway in parallel with the tubular conduits of other dispersers; a radiating conduit structure, consisting of a plurality of smaller radiating passageways arranged in a radially dispersed configuration relative to each other; an end portion of the tubular conduit being connected to the radiating conduit structure, wherein the parallel passageway of the tubular conduit is in fluid communication with corresponding radiating passageways in the radiating conduit structure.

Preferably, the radiating passageways are arranged in a spherical configuration.

Preferably, the fluid filtering material is an alkaline solution such as a sodium hydroxide (NaOH) solution.

Preferably, the inlet channel further includes a wire (e.g. steel) filtering layer for filtering the exhaust gas before it enters the disperser.

Preferably, the reaction chamber has a multi-layered structure adapted so that the small bubbles of exhaust gas can advance in a zigzag (e.g. "Z"-shaped) path through the fluid filtering material in the reaction chamber.

Preferably, the uppermost layer of the reaction chamber has wire (e.g. steel) filtering materials for condensing a volatile substance within the exhaust gas from the fluid filtering material.

Preferably, the apparatus further includes a re-circulating filtration system for filtering the fluid filtering material.

Preferably, the re-circulating filtration system further includes: a filtering chamber, in fluid communication with the reaction chamber, for filtering the fluid filtering material; a pump for transferring the fluid filtering material from the reaction chamber to the filtering chamber; a control valve for controlling a flow of the fluid filtering material from the filtering chamber to the reaction chamber; a fluid level indicator inside the filtering chamber for detecting a fluid level therein; and a fluid level controller for periodically activating the pump for transferring the fluid filtering material from the reaction chamber to the filtering chamber, and controlling the opening and closing of the control valve based on the detected fluid level in the filtering chamber.

Preferably, the re-circulating filtration system further includes: a radiator connecting the filtering chamber with the reaction chamber; and a radiator fan for cooling the fluid filtering material in the radiator.

According to another aspect of the present invention, there is provided a method for purifying exhaust gas from a motor vehicle, including the following steps: directing the exhaust gas to flow through an inlet channel and into the reaction chamber containing a fluid filtering material; directing the exhaust gas in the reaction chamber to flow through dispersers with narrow passageways for substantially dispersing the exhaust gas into the fluid filtering material as small bubbles; and controlling a ventilator at an exhaust port for maintaining a balance between a flow of the exhaust gas into the reaction chamber and a flow of the exhaust gas out of the reaction chamber.

Preferably, the step of directing the exhaust gas to flow through the dispersers further includes: directing the exhaust gas to flow through a tubular conduit consisting of smaller parallel passageways; and then directing the exhaust gas to flow through a radiating conduit structure consisting of smaller radiating passageways.

Preferably, the exhaust gas is directed to flow through a spherically arranged radiating conduit structure.

Preferably, the method further includes the step of: directing the exhaust gas to flow into a fluid filtering material containing sodium hydroxide (NaOH) solution.

Preferably, the method further includes the step of: filtering the exhaust gas with a wire filtering layer in the inlet channel before it flows into the disperser.

Preferably, the method further includes the step of: advancing the small bubbles of exhaust gas in a zigzag path through the fluid filtering material in the reaction chamber.

Preferably, the method further includes the step of: condensing a volatile substance within the exhaust gas from the fluid filtering material by wire filtering materials at an upper layer of the reaction chamber.

Preferably, the method further includes the step of: performing a re-circulating filtration of the fluid filtering material.

Preferably, the circulating filtration includes the following steps of: periodically transferring the fluid filtering material from the reaction chamber to the filtering chamber for filtering the fluid filtering material; detecting a level of the fluid filtering material in the filtering chamber; and controlling a flow of fluid filtering material from the filtering chamber to the reaction chamber based on the detected level of the fluid filtering material in the filtering chamber for adjusting and maintaining a predetermined level of the fluid filtering material in the filtering chamber.

Preferably, the method further includes the following steps: transferring the fluid filtering material from the filtering chamber back to the reaction chamber through a radiator; and cooling the fluid filtering material in the radiator using a radiator fan.

The features and advantages of the present invention are illustrated in the following description in conjunction with figures and explanations to the technical features.

### BRIEF DESCRIPTION OF THE DRAWINGS

Representative embodiments of the present invention are described herein, by way of example only, with reference to the accompanying drawings, wherein:
Figure 1 shows a representative embodiment of an exhaust gas purification apparatus according to the present invention;
Figure 2 shows a disperser for use in a representative embodiment of the exhaust gas purification apparatus according to the present invention; and
Figure 3 shows an electric schematic diagram of the water level controller for a representative embodiment of the exhaust gas purification apparatus according to the present invention.
Figure 4 shows a pin configuration assignment diagram of the timer in the representative embodiment of Figure 3.

### DETAILED DESCRIPTION OF THE REPRESENTATIVE EMBODIMENTS

The present invention can be implemented in various ways without departing from the sprit or basic features of the present invention. The scope of the present invention is to be construed by reference to the appended claims, rather than strictly on the basis of the foregoing statements. Thus, the appended claims should be construed to include any embodiment having features that are functionally equivalent to those features recited in any one of the appended claims, or which serve the same purpose or intention as those features recited in any one of the appended claims.

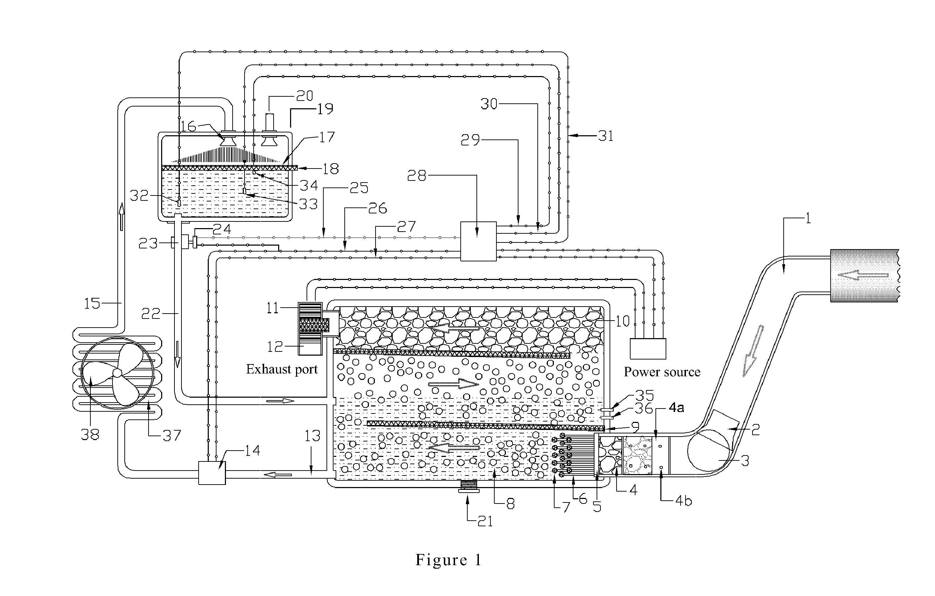

Figure 1 shows a representative embodiment of an exhaust gas purification apparatus according to the present invention. The apparatus includes a fluid filtering device and a re-circulating filtration system. The apparatus shown in Figure 1 includes:
(i) an inlet channel 1, through which the exhaust gas from a motor vehicle can enter the reaction chamber;
(ii) a high temperature tolerant flexible fixing means 2, for engaging a hollow ball 3 in a manner that helps prevent the solution (or fluid filtering material) in the reaction chamber from flowing back towards the cylinder of the motor vehicle;
(iii) a hollow ball 3, serving as a valve, which if the solution (or fluid filtering material) in the reaction chamber flows back towards the hollow ball 3, the hollow ball 3 can float and engage with the fixing means 2 to form an effective seal that helps prevent the solution (or fluid filtering material) in the reaction chamber from flowing back towards the cylinder of the motor vehicle (e.g. while the engine of the motor vehicle is running at low speed);
(iv) wires 4 (e.g. made of steel), forming a filtering layer for filtering large suspended particles to minimise blockage of the dispersers 7;
(v) a removable cap 4a, which can be detached for changing the wires 4 or for cleaning the conduits or passageways of the apparatus;
(vi) screws 4b (or similar attachment means), for fixing the removable cap;
(vii) fixing means 5, for securing the position of the smaller passageways 6 of the dispersers 7 and for directing the exhaust gas in the inlet channel into the smaller passageways 6 and preventing leakage of exhaust gas;
(viii) one or more dispersers 7, each having a narrow passageway 6 in fluid communication with a radiating conduit structure consisting of a plurality of conduits arranged in a radiating spherical configuration, the parallel arrangement of narrow passageways 6 being in fluid communication with inlet channel 1, such that the exhaust gas from the inlet channel 1 can enter the smaller passageways 6 and flow through the radiating conduit structure of the dispersers 7 to be substantially dispersed into the reaction chamber 8 as small bubbles;
(ix) an reaction chamber 8, containing a fluid filtering material such as alkaline solution e.g.: sodium hydroxide (NaOH) solution, wherein a chemical reaction (such as a neutralization reaction) takes place between the exhaust gas and NaOH solution which helps remove suspended particles and contaminants including CO₂, CO, S0₂, nitrogen oxides etc. in the exhaust gas, thereby purifying the exhaust gas;
(x) plates 9, preferably two plates 9 being arranged inside the reaction chamber 8 to form three layers of space, each plate 9 being placed at a certain angle relative to a reference horizontal water level so that the plates 9 direct the bubbles of exhaust gas to flow along a zigzag (or Z-shaped) path from a lower layer to an upper layer of the reaction chamber 8, which also helps prevent fluid overflow, and can help muffle engine noise. The arrows in Figure 1 show the flow direction of the bubbles;
(xi) wires 10 (e.g. made of steel), for providing a filtering layer for condensing volatile substances of the fluid filtering material contained in the purified exhaust gas, which can help minimise the escape of fluid filtering material from the reaction chamber 8;
(xii) a small ventilator 1l, which can help discharge exhaust gas from the reaction chamber 8, and balance the flow of exhaust gas entering and leaving the reaction chamber 8, so as to minimise blockage of exhaust gas by the purification system especially in situations where an vehicle engine is operating at low speed and the exhaust gas generation is low; and
(xiii) an exhaust port 12, providing an outlet for the filtered exhaust gas, the exhaust port having a diameter comparable to the diameter of the inlet channel 1.

The re-circulating filtration system includes:
(i) a drainage channel 13 for releasing any waste or residue resulting from the filtering process inside the reaction chamber 8, or excess of the fluid filtering material (such as NaOH solution). Arrows in the drainage channel of Figure 1 indicate the flow direction of substances therein;
(ii) a pump 14, for transferring waste or residue resulting from the filtering process inside the reaction chamber 8, and fluid filtering material (such as NaOH solution) to the filtering chamber 19;
(iii) a first fluid conduit 15, for directing substances including fluid filtering material (such as NaOH solution) from the reaction chamber 8 to the filtering chamber 19;
(iv) a shower head 16, for sprinkling the fluid filtering material (such as NaOH solution) as well as the residue from the reaction chamber 8 uniformly over the filter layer;
(v) a filter layer 17, for filtering the residue in the fluid filtering material;
(vi) a filter layer handle 18, for replacing the filter layer 17;
(vii) a filtering chamber 19, for filtering the fluid filtering material from the reaction chamber 8, and the filtered fluid filtering material is then directed back to the reaction chamber 8;
(viii) a port 20, for filling fluid filtering material (such as NaOH solution) into the filtering chamber 19;
(ix) a drainage valve 21, for draining the deposited residue, and replacing the fluid filtering material, in the reaction chamber 8;
(x) a second fluid conduit 22, through which the fluid filtering material after being filtered in the filter chamber 19 flows back to the reaction chamber 8;
(xi) a control valve 23, for controlling the flow of fluid filtering material from the filtering chamber 19 to the reaction chamber 8 in order to adjust and maintain a desired level of fluid filtering material in the reaction chamber 8;
(xii) a motor 24 (e.g. a torque motor), for opening and closing the control valve 23 automatically to adjust a fluid level inside the filtering chamber 19;
(xiii) motor electric wires 25, for supplying power to the motor 24, such that when it is detected that a fluid level inside the reaction chamber 8 is low, a water level controller 28 supplies power to the motor 24 which configures the control valve in an open state, thus allowing fluid filtering material to flow out of the filtering chamber 19 and into the reaction chamber 8;
(xiv) return electric wires 26 connected to the motor 24 and pump 14 so as to form a complete circuit with the water level controller 28;
(xv) pump electric wires 27, for supplying power to the pump 14, wherein when the probes 32, 33 and 34 detect that a fluid level in the filtering chamber 10 reaches a high level, the water level controller 28 regulates the power supplied to the pump 14 to turn the pump 14 off. Reversely, the water level controller 28 can regulate power to activate the pump 14 for pumping fluid filtering material in the reaction chamber 8 into the filtering chamber 19;
(xvi) a water level controller 28, for controlling a level of fluid filtering material (such as NaOH solution) in the reaction chamber 8, such that a desired amount of fluid filtering material is maintained in the reaction chamber 8, the amount of fluid filtering material being neither too much to result in overflow, nor too little to be inadequate for effective purification of the exhaust gas;
(xvii) electrical wires 29, 30, 31 for sending to the water level controller 28 signals from the probes 32, 33 and 34 representing a detected fluid level inside the filtering chamber 19;
(xviii) probes 32, 33 and 34 connected to the water level controller 28, for detecting the fluid level inside the filtering chamber 19 reaching predetermined thresholds and are used for controlling the circulation of the fluid filtering material;
(xix) fluid level indicator lamps 35, 36;
(xx) a radiator 37, for reducing the temperature of the fluid filtering material retrieved from the reaction chamber 8 before it enters the filtering chamber 19; and
(xxi) a radiator fan 38.

### Fluid filtering apparatus

In a representative embodiment of the present invention, when the exhaust gas (e.g. tail gas) from a motor vehicle enters the reaction chamber 8 through the inlet channel 1, relatively large suspended particles are first filtered by wires 4 so as to minimise such particles from causing blockage to the narrow passageways 6 of the dispersers 7. The exhaust gas enters the dispersers 7 through the narrow passageways 6 (e.g. stainless steel pipelines) and is dispersed, into the fluid filtering material in the reaction chamber 8, as small bubbles by means of the smaller diameter radiating passageways in the radiating conduit structure of the disperser 7. In a representative embodiment, pollutant gases (such as CO₂, SO₂, nitrogen oxides etc.) contained in the small bubbles of dispersed exhaust gas undergo acid-base neutralization reaction at the surface of the bubbles with the NaOH fluid filtering material to produce salts (such as NaC0₃), whilst some of the suspended particles in the bubbles of exhaust gas may be dissolved in the fluid filtering material. By dispersing the exhaust gas into the fluid filtering material as small bubbles, the dispersers 7 help to greatly increase the contact surface area of the exhaust gas with the fluid filtering material (or solution), which thereby increases the efficiency of the neutralization reaction between the exhaust gas and the fluid filtering material. After reaction in the reaction chamber 8, the exhaust gas is discharged from the exhaust port 12 of the reaction chamber 8, at which stage the released exhaust gas will contain a substantially reduced level of polluting substances. The ventilator 11 is provided at the exhaust port 12 of the reaction chamber 8 for maintaining a balance between a flow of the exhaust gas into and out of the reaction chamber 8, that is, so that the pressure of the exhaust gas at the inlet 1 is approximately equal to that of the pressure of the exhaust gas at the exhaust port 12. The exhaust gas can be easily discharged from the reaction chamber 8, and the fluid filtering material is prevented from backflow into the engine cylinder of the motor vehicle.

### Re-circulating filtration system for fluid filtering material

The concentration of the fluid filtering material in the reaction chamber 8, such as NaOH solution, will reduce after an extended period of reacting with chemicals in the exhaust gas (e.g. CO₂, SO₂, nitrogen oxides etc.). The level of fluid filtering materials may also reduce due to evaporation of the fluid filtering material and water content therein. The salts produced by the reaction between the exhaust gas and the fluid filtering material may become residue or deposits containing various suspended particles from the exhaust gas. As a result, the fluid filtering material needs to be pumped (e.g. from a lower part of the reaction chamber 8) into the filtering chamber 19, which is adapted for filtering the fluid filtering material and replenishing its concentration and water content. It is necessary to replenish the supply of fluid filtering material in the filtering chamber 19 once it has been used up. In order to test the concentration of the fluid filtering material (such as NaOH solution) in the reaction chamber 8, it is possible to extract samples of the fluid filtering material from the drainage valve 21 and observe any changes in pH value, e.g.: by means of an acid meter or litmus paper. If the colour of the litmus paper changes from dark blue to light blue, then the concentration of the NaOH solution is getting low, and needs to be replenished by adding more NaOH solution to the reaction chamber.

As the amount of fluid filtering material in the reaction chamber 8 should be maintained at a desired level in order to effectively react with exhaust gas, the filtering apparatus has a specific system, such as the water level controller 28, for providing this function. When the level of fluid filtering material in the filtering chamber 19 is reduced, probe 33 becomes exposed from the fluid filtering material in the filtering chamber 19 and thus an electric current is unable to conduct between the probes 32 and 33. As a result, a controlling relay in the water level controller 28 is switched off, and the electric wires 25 and 26 supply power to the motor 24 in a manner that causes the motor 24 to close the second conduit 22. In addition, the electric wires 26 and 27 for the pump 14 supply power to activate the pump 14. The fluid filtering material in the reaction chamber 8, as well as the salts produced by the reactions and any waste (such as suspended particles), are pumped into the filtering chamber 19 and sprayed onto the filter layer 17, after which it is able to flow down towards the bottom of the filtering chamber 19. When the level of fluid filtering material in the filtering chamber 19 rises, probe 34 becomes immersed in the fluid filtering material and thus form an electrical connection between probes 32 and 34. This causes the controlling relay in the water level controller 28 to be switched on, and the electric wires 25 and 26 supply power to the motor 24 in a manner that causes the motor 24 to allow fluid filtering material to flow through the second conduit 22 to replenish the supply of fluid filtering material in the reaction chamber 8.

In another representative embodiment of the present invention, a replenishment tank (not shown) is connected to the filtering chamber 19. When the level of fluid filtering material at the bottom of the filtering chamber 19 becomes low, a stainless steel ball in the filtering chamber 19 (that floats at a position relative to the fluid level in the filtering chamber 19) drops to a lower position relative to filtering chamber 19 due to the fall in fluid level. This triggers additional fluid filtering material (e.g. NaOH solution) to flow from the replenishment tank to the filtering chamber 19.

In another representative embodiment of the present invention, a radiating means is provided, which comprises a radiator 37 for lowering the temperature of the fluid filtering material from the reaction chamber 8 in cooperation with a radiator fan 38.

In another representative embodiment of the present invention, the fluid level indicator lamps 35 and 36 are provided in the reaction chamber 8. When the level of fluid filtering material in the reaction chamber 8 drops to a position below where the indicator lamps 35 or 36 are located, the corresponding lamps light up to indicate that the level of filtering fluid is too low, and that additional fluid filtering material needs to be added to the apparatus (e.g. via port 20 of the filtering chamber 19).

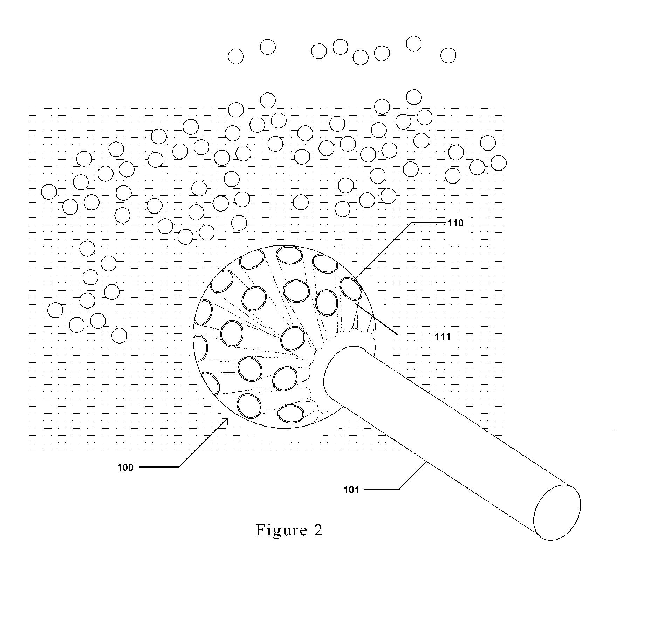

Figure 2 shows an example of one of the dispersers 7 for use in a representative embodiment of the exhaust gas purification apparatus. The disperser 7 comprises a tubular conduit 101, and a spherically radiating conduit structure 110 made up of a plurality of smaller radiating passageways 111 that are arranged in radially dispersed directions relative to each other. One end of the tubular conduit 101 is in fluid communication with the spherically radiating conduit structure 110, wherein the tubular conduit 101 is in fluid communication with each of the smaller radiating passageways 111 in the spherically radiating conduit structure 110. When exhaust gas is introduced into the open end of the tubular conduit 101, the gas is distributed into each of the smaller radiating passageways 111 of the radiating conduit structure 110, which directs the exhaust gas to flow into the fluid filtering material in different directions as small bubbles. The structure of the disperser 7 can help effectively disperse the flow of exhaust gas, while minimising resistance to the flow of gas through the disperser 7 and minimising obstruction to the flow of exhaust gas emission from the motor vehicle.

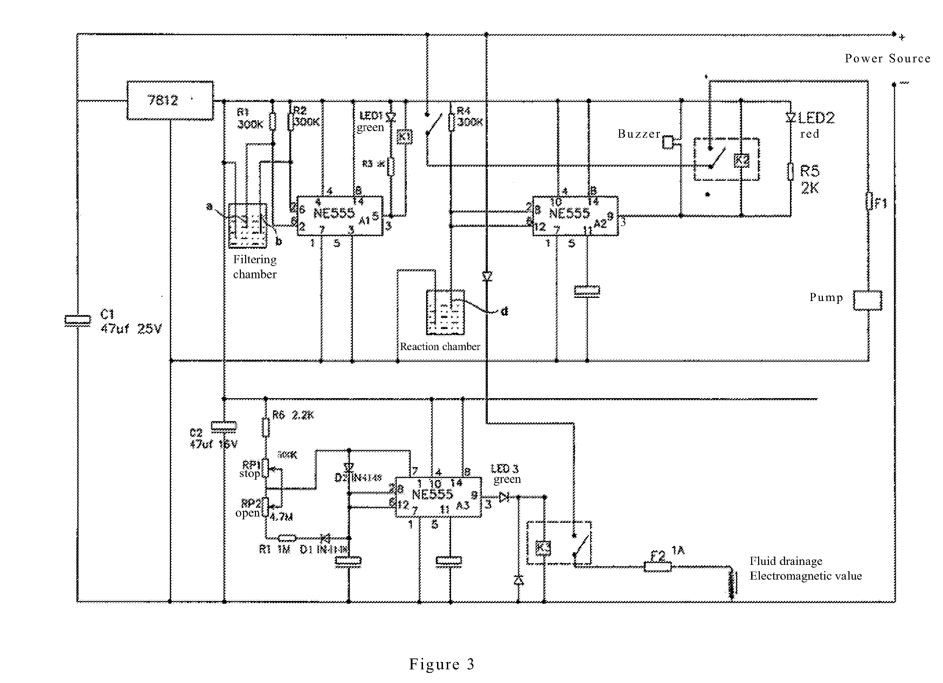

Figure 3 is an electric schematic diagram showing the circuitry of a representative embodiment of the water level controller 28 according to the present invention. When the level of fluid filtering material in the filtering chamber 19 is below probe b, both probes (or sensors) a and b leave the fluid filtering material surface, pin 2 and pin 6 of integrated circuit A1 (ICA1) are biased to a high voltage level because of the resistance provided by resistors R1 and R2, the circuit is reset, pin 3 outputs a low level, the relay K1 is activated to a closed state (which allows electric current to flow through the switch), power is supplied to the pump, and the green light emitting diode (LEDI) indicator lamp lights up to indicate that fluid filtering material is being injected into the filtering chamber 19. As the level of fluid filtering material inside the filtering chamber 19 rises, when the fluid level reaches the level of probe (or sensor) b, the voltage level at pin 6 of ICA1 becomes low, yet the circuit is not switched, and fluid filtering material continues to be injected. When the level of fluid filtering material in the filtering chamber 19 reaches probe (or sensor) a, pin 2 of trigger terminal of ICA1 is changed to low voltage, ICA1 is reversely set quickly, and pin 3 outputs a high voltage level. K1 is then open, causing the pump to stop working. Fluid injection also stops and the green LEDl goes out at the same time. When the level of fluid filtering material in the filtering chamber 19 drops to the level corresponding to probe a, the state of ICA1 will not be switched, although pin 2 of ICA1 will be set to high level. Only when the level of fluid filtering material drops below the level of probe b, ICA1 starts to reset due to pin 6 being biased at high voltage level, and the circuit repeats the above fluid filtering material injection process, therefore the fluid level in the filtering chamber can be kept between the probes a and b automatically.

However, the control process described above is also controlled based on the level of fluid filtering material in the reaction chamber of the exhaust gas purification apparatus. When the level of fluid filtering material falls below the level corresponding to probe d (indicating that the exhaust gas purification apparatus is seriously lacking fluid filtering material e.g. positions corresponding to fluid level indicator lamp 36 in Figure 1), the inputs for both pin 2 and pin 6 of the integrated circuit A2 (ICA2) become high, hence ICA2 resets pin 3 to provide a low signal output, which configures the relay K2 to an open state to cut off the circuit involving relay K1 which provides power to the pump. This makes the pump to stop even if K1 is closed, and also triggers the red LED2 to light up and a buzzer to sound a warning. Only when the level of fluid filtering material in the filtering chamber 19 reaches a level corresponding to probe d is ICA2 caused to reset, which reactivates the pump.

In accordance with a representative embodiment of the present invention, the control of fluid drainage from the filtering chamber 19 involves, after the powering up of the circuit (shown in Figure 3), integrated circuit A3 (ICA3) generates an alternating pattern of high and low output levels, and the corresponding green light emitting diode (LED3) will light up successively. The time for outputting high level and low level can be controlled by adjusting at least one of the two bar resistors RPl and RP2. This controls the open and close of the relay K3, which in turn regulates the open and close timing of the fluid drainage electromagnetic valve corresponding to the control valve 23 which driven by motor 24 for regulating the drainage of fluid from the filtering chamber 19. When the power supply is cut off, the loss of power to the relay K3 results in the fluid drainage electromagnetic valve being configured to a closed position which prevents fluid filtering material from flowing down to the reaction chamber.

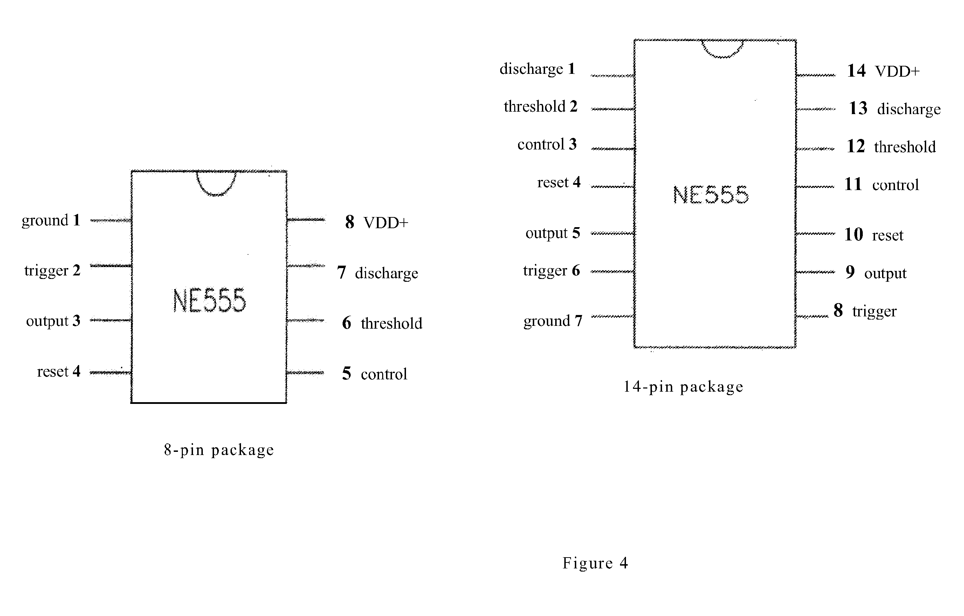

Figure 4 shows a pin configuration diagram for the timer integrated circuit (or chip) component that is used in the water level controller 28 shown in Figure 3, in accordance with a representative embodiment of the present invention. Preferably, a NE555 timer chip is used, which should be known to those skilled in the art. In another aspect of the present invention, a CMOS T555 timer chip can be used. If the driving electric current required for opening the fluid drainage electromagnetic valve from the closed state is insufficient, additional transistors can be used to increase the electric current driving to the fluid drainage electromagnetic valve. Although specific electrical components for use in a representative embodiment of the present invention have been described above, those skilled in the art will appreciate that other similar components can be used, or obvious variations can be made to achieve the same effect as that described above.

In a representative embodiment of the present invention, NaOH solution is used as the main fluid filtering material, and the related chemical reactions are as follows:
Neutralization reaction with all kinds of acid gases in the exhaust gas from the motor vehicle may include the following:

| | |
|---|---|
| A. Reaction with CO₂: | CO₂ + 2NaOH - Na₂C0₃ + H₂O |
| | |
| B. Reaction with SO₂: | 2SO₂ + O₂ → 2S03 |
| | |
| | SO₃ + H₂O → H₂S0₄ |
| | H₂S0₄ + NaOH - NaHSO₄ + H₂O |
| | |
| C. Reaction with NO₂: 1 | 2NO₂ + 2H₂O → 2HNO₃ + H₂↑ |
| | |
| | HNO₃ + NaOH - NaNO₃ + H₂O |

The features of the representative embodiments described in this specification can be selectively combined together (depending on the functionality required) to provide other representative forms or embodiments of the present inventions.

Although the present invention is illustrated and described with reference to representative embodiments of the present invention, a person skilled in the art would understand that various modifications to the modes and details thereof could be made without departing from the scope of the present invention. Regarding the above said embodiments, it is not necessary to implement the steps of the method orderly.

## Claims

1. An apparatus for purifying exhaust gas from a motor vehicle, including: a reaction chamber, an inlet channel, and an exhaust port; **characterized in that**:
i) the reaction chamber contains a fluid filtering material;
ii) the inlet channel is connected to one or more dispersers each having a narrow passageway, which are adapted for substantially dispersing the exhaust gas into the fluid filtering material as small bubbles; and
iii) the exhaust port has a ventilator for maintaining a balance between a flow of the exhaust gas into the reaction chamber and a flow of the exhaust gas out of the reaction chamber.

2. An apparatus as claimed in claim 1, **characterized in that**, the disperser includes:
a tubular conduit, consisting of a passageway in parallel with the tubular conduits of other dispersers;
a radiating conduit structure, consisting of a plurality of smaller radiating passageways arranged in a radially dispersed configuration relative to each other;
an end portion of the tubular conduit being connected to the radiating conduit structure, wherein the parallel passageway of the tubular conduit is in fluid communication with corresponding radiating passageways in the radiating conduit structure.

3. An apparatus as claimed in claim 2, **characterized in that**, the radiating passageways are arranged in a spherical configuration.

4. An apparatus as claimed in any one of the preceding claims, **characterized in that**, the fluid filtering material is an alkaline solution.

5. An apparatus as claimed in any one of the preceding claims, **characterized in that**, the inlet channel further includes a wire filtering layer for filtering the exhaust gas before it enters the disperser.

6. An apparatus as claimed in any one of the preceding claims, **characterized in that**, the reaction chamber has a multi-layered structure adapted so that the small bubbles of exhaust gas can advance along a zigzag path through the fluid filtering material.

7. An apparatus as claimed in any one of the preceding claims, **characterized in that**, an uppermost layer of the reaction chamber has wire filtering materials for condensing a volatile substance of the fluid filtering material contained in the exhaust gas.

8. An apparatus as claimed in any one of the preceding claims, **characterized in that**, the apparatus further includes a re-circulating filtration system for filtering the fluid filtering material.

9. An apparatus as claimed in claim 8, **characterized in that**, the re-circulating filtration system includes:
a filtering chamber, in fluid communication with the reaction chamber, for filtering the fluid filtering material;
a pump for transferring the fluid filtering material from the reaction chamber to the filtering chamber;
a control valve for controlling a flow of the fluid filtering material from the filtering chamber to the reaction chamber;
a fluid level indicator inside the filtering chamber for detecting a fluid level therein; and
a fluid level controller for periodically activating the pump for transferring the fluid filtering material from the reaction chamber to the filtering chamber, and controlling the opening and closing of the control valve based on a detected fluid level in the filtering chamber.

10. An apparatus as claimed in claim 8 or 9, **characterized in that**, the re-circulating filtration system further includes:
a radiator connecting the filtering chamber with the reaction chamber; and
a radiator fan for cooling the fluid filtering material in the radiator.

11. A method for purifying exhaust gas from a motor vehicle, including the following steps:
directing the exhaust gas to flow through an inlet channel and into a reaction chamber containing a fluid filtering material;
directing the exhaust gas in the reaction chamber to flow through dispersers with narrow passageways for substantially dispersing the exhaust gas into the fluid filtering material as small bubbles; and
controlling a ventilator at an exhaust port for maintaining a balance between a flow of the exhaust gas into the reaction chamber and a flow of the exhaust gas out of the reaction chamber.

12. A method as claimed in claim 1 l, **characterized in that**, the step of directing the exhaust gas to flow through the dispersers further includes:
directing the exhaust gas to flow through a tubular conduit consisting of a passageway in parallel with the tubular conduits of other dispersers; and then
directing the exhaust gas to flow through a spherically arranged radiating conduit structure consisting of smaller radiating passageways.

13. A method as claimed in claim 11 or 12, **characterized in that**, the method further includes the step of:
directing the exhaust gas to flow into a fluid filtering material containing alkaline solution;
filtering the exhaust gas with a wire filtering layer in the inlet channel before it flows into the disperser;
advancing the small bubbles of exhaust gas along a zigzag path through the fluid filtering material in the reaction chamber; and
condensing a volatile substance of the fluid filtering material contained in the exhaust gas by wire filtering materials at an upper layer of the reaction chamber.

14. A method as claimed in any of claim 11 to 13, **characterized in that**, the method further includes the step of: performing a re-circulating filtration of the fluid filtering material.

15. A method as claimed in claim 14, **characterized in that**, the re-circulating filtration includes the following steps of:
periodically transferring the fluid filtering material from the reaction chamber to the filtering chamber for filtering the fluid filtering material;
detecting a level of the fluid filtering material in the filtering chamber; controlling a flow of fluid filtering material from the filtering chamber to the reaction chamber based on the detected level of the fluid filtering material in the filtering chamber for adjusting and maintaining a predetermined level of the fluid filtering material in the filtering chamber;
transferring the fluid filtering material from the filtering chamber back to the reaction chamber through a radiator; and
cooling the fluid filtering material in the radiator using a radiator fan.
